# EUROPEAN PATENT SPECIFICATION

(11) **EP 4 488 118 B1**
(45) Date of publication and mention of the grant of the patent: **31.12.2025**
(21) Application number: 24185901.6
(22) Date of filing: 02.07.2024
(51) Int. Cl.: B60Q 1/00

(54) **ELECTRONIC COMPONENT ATTACHMENT STRUCTURE FOR VEHICLE**
BEFESTIGUNGSSTRUKTUR FÜR ELEKTRONISCHE KOMPONENTEN FÜR EIN FAHRZEUG
STRUCTURE DE FIXATION DE COMPOSANT ÉLECTRONIQUE POUR VÉHICULE

(30) Priority: 07.07.2023 JP 2023111888
(43) Date of publication of application: 08.01.2025
(73) Proprietor: Suzuki Motor Corporation, Shizuoka 432-8611 (JP)
(72) Inventor: KUMOI, Kousuke, HAMAMATSU-SHI, 431-0201 (JP)
(74) Representative: Plasseraud IP

(56) References cited:
- EP-A1- 1 712 422
- FR-A1- 3 102 615
- JP-B2- 7 124 577

## Description

### [Field of the Invention]

The present invention relates to an electronic component attachment structure for a vehicle.

### [Background of the Invention]

A rear bumper that is elongate in the vehicle width direction is installed at the rear end of a vehicle such as an automobile. Predetermined vehicle electronic components (e.g. an antenna) may be attached to the rear bumper.

Patent Document 1 describes a vehicle remote door lock control apparatus. The vehicle remote door lock control apparatus includes a portable device, a control device, and a plurality of antennas (LF antennas) as vehicle electronic components. The control device is mounted on the vehicle, communicates wirelessly with the portable device by means of radio waves, and controls locking and unlocking of the door lock in accordance with the results of the communication. The antennas are arranged on both left and right sides of a rear panel (rear bumper) in order to perform radio communication with a nearby portable device outside the vehicle.

Patent Document 1 states that arranging the plurality of antennas on the left and right sides of the rear panel makes it easy for the radio waves to proceed from the corners of the vehicle to the distal side on the side faces of the vehicle and the distal side on a rear face of the vehicle.

### [Prior Art Documents]

### [Patent Documents]

[Patent Document 1] JP 2005-76369A
The document JP7124577B2 discloses an electronic component attachment structure according to the preamble of claim 1.

### [Summary of the Invention]

### [Problems to be Solved by the Invention]

In the vehicle remote door lock control apparatus of Patent Document 1, the plurality of antennas are arranged in a distributed manner on the rear bumper, resulting in an increased length of the harnesses connected to the antennas and a wider layout area of the harnesses.

When an external force acts on the rear bumper, the external force may be transmitted to the antennas and the harnesses and may change the positions of the antennas and the harnesses. The harnesses may thus be held between the rear bumper and a vehicle skeleton component (e.g. a rear bumper beam) and damaged; e.g. wires may be broken. The antennas as electronic components may also be displaced and come into contact with a nearby member, and may consequently be damaged.

In view of the foregoing issue, the present invention aims to provide an electronic component attachment structure for a vehicle that allows electronic components to avoid contact with other nearby members due to displacement of the electronic components when an external force is transmitted to the electronic components, while preventing breakage of harnesses.

### [Means to Solve the Problems]

To address the above issue, a representative configuration of the present invention lies in an electronic component attachment structure for a vehicle including: a rear bumper of the vehicle; a plurality of electronic components; and a fixing member fixing the plurality of electronic components to the rear bumper, wherein the rear bumper has: a panel wall arranged at a rear end of the vehicle; and a bottom wall extending from a lower end of the panel wall to a front side of the vehicle, and the fixing member has: a front wall disposed so as to be separated, to the front side of the vehicle, from the panel wall and to face the panel wall, the front wall being joined to the bottom wall; and an upper wall extending from an upper end of the front wall to the rear side of the vehicle and joined to the panel wall, the upper wall linking the panel wall to the front wall.

### [Effect of the Invention]

According to the present invention, it is possible to provide an electronic component attachment structure for a vehicle that allows electronic components to avoid contact with other nearby members due to displacement of the electronic components when an external force is transmitted to the electronic component side, while preventing breakage of harnesses.

### [Brief Explanation of the Drawings]

FIG. 1 shows an electronic component attachment structure for a vehicle according to an example of the present invention.
FIG. 2 shows a main part of the electronic component attachment structure for a vehicle shown in FIG. 1.
FIG. 3 shows a fixing member shown in FIG. 2(a) with a plurality of electronic components attached thereto.
FIG. 4 is an A-A cross-sectional view of the electronic component attachment structure for a vehicle shown in FIG. 2(b).
FIG. 5 shows other cross-sectional views of the electronic component attachment structure for a vehicle shown in FIG. 2(b).
FIG. 6 illustrates a variation of the fixing member shown in FIG. 2.
FIG. 7 illustrates another variation of the fixing member shown in FIG. 2.

### [Embodiments of the Invention]

A representative configuration of one embodiment of the present invention is characterized in an electronic component attachment structure for a vehicle including: a rear bumper of the vehicle; a plurality of electronic components; and a fixing member fixing the plurality of electronic components to the rear bumper, wherein the rear bumper has: a panel wall arranged at a rear end of the vehicle; and a bottom wall extending from a lower end of the panel wall to a front side of the vehicle, and the fixing member has: a front wall disposed so as to be separated, to the front side of the vehicle, from the panel wall and to face the panel wall, the front wall being joined to the bottom wall; and an upper wall extending from an upper end of the front wall to the rear side of the vehicle and joined to the panel wall, the upper wall linking the panel wall to the front wall.

In the above configuration, the length of harnesses connected to the plurality of electronic components can be shortened due to the electronic components being attached to one fixing member that is fixed to the rear bumper. This can reduce the area of each harness that is subjected to an external force and prevent damage of the harness. Further, a closed cross section can be formed by the panel wall and the bottom wall of the rear bumper and the front wall and the upper wall of the fixing member. This can increase the rigidity of the fixing member and a region of the rear bumper around the fixing member, reduce the external force transmitted to the electronic components, and suppress displacement of the electronic components and avoid contact with other nearby members.

Attaching points of the plurality of electronic components are set on the fixing member, thus improving workability in attaching the electronic components. Note that, compared to the case where the plurality of electronic components are separately fixed to the rear bumper without using the fixing member, the above configuration can reduce the number of fixing points of the electronic components and the fixing points of the harnesses to the rear bumper. This can also reduce the cost.

It is preferable that the plurality of electronic components include a first electronic component and a second electronic component, and the first electronic component is attached to the front wall of the fixing member, and the second electronic component is attached to the upper wall. It is also preferable that the plurality of electronic components include a first electronic component and a second electronic component, and the first and second electronic components are attached to either one of the front wall and the upper wall of the fixing member in different orientations.

This allows the plurality of electronic components to be attached to the front wall and the upper wall of the fixing member, respectively, or attached to the front wall or the upper wall of the fixing member in different orientations. Thus attaching the electronic components to the fixing member in different orientations can prevent the electronic components from coming into contact with each other and being damaged when subjected to an external force. The orientations of the electronic components attached to the fixing member being different from each other facilitates work of attaching the electronic components and work of laying out the harnesses.

It is preferable that at least one of the plurality of electronic components is attached to the front wall of the fixing member, and each remaining electronic component other than the at least one is attached to the upper wall. The electronic components can thus be attached to the front wall and the upper wall of the fixing member in different orientations.

It is preferable that the upper wall has: a horizontal portion facing the bottom wall; and a flange portion bent from the horizontal portion and extending upward along the panel wall, and the first electronic component is attached to the horizontal portion, and the second electronic component is attached to the flange portion. Thus, the first and second electronic components are preferably attached in different orientations.

This allows the electronic components to be attached, in different orientations, to the horizontal portion and flange portion of the upper wall of the fixing member. Contact between the electronic components can be avoided when subjected to an external force. Even if an external force acts on either one of the horizontal portion and the flange portion of the upper wall, part of the external force transmitted to the other one of the horizontal portion and the flange portion can be absorbed by deforming the fixing member. This suppresses displacement of the electronic component attached to the other one of the horizontal portion and the flange portion of the upper wall, thus facilitating protection of this electronic component.

It is preferable that the upper wall has a panel joint section joining the upper wall to the panel wall, and the first and second electronic components are arranged in a vehicle width direction with the panel joint section therebetween. The first and second electronic components being thus separated from each other in the vehicle width direction with the panel joint section therebetween makes it unlikely for the electronic components to come into contact with each other even if the region around the panel joint section of the fixing member are subjected to an external force and displaced, and can prevent the electronic components from being damaged.

It is preferable that the upper wall has: a horizontal portion facing the bottom wall; and a flange portion bent from the horizontal portion and extending upward along the panel wall, and the first electronic component is attached to the horizontal portion, and the second electronic component is attached to the flange portion. The plurality of electronic components can thus be attached, in different orientations, to the flange portion of the upper wall and the front wall of the fixing member.

It is preferable that the panel joint section joins the flange portion to the panel wall, and the flange portion extends from the panel joint section toward the second electronic component. With this, even if an external force from the panel wall of the rear bumper is transmitted to the flange portion via the panel joint section of the upper wall of the fixing member, the boundary between the flange portion and the horizontal portion and the surrounding region are deformed to absorb the external force. Further, the flange portion of the upper wall does not extend to the first electronic component attached to the horizontal portion. This makes it unlikely for the external force to be transmitted to the horizontal portion of the upper wall, and facilitates protection of the first electronic component.

It is preferable that the first electronic component is attached to the front wall of the fixing member, and the second electronic component is attached to the upper wall, the first electronic component is disposed in a space partitioned by the front wall, the upper wall, the panel wall, and the bottom wall, and the second electronic component is disposed outside the space.

The first electronic component and the second electronic component are separated by the fixing member since the first electronic component is thus disposed in the space partitioned by the fixing member and the rear bumper, and the second electronic component is disposed outside the space. This makes it possible to avoid interference between the electronic components. Even if the fixing member is subjected to an external force and deformed, the first and second electronic components can easily be protected.

It is preferable that the first electronic component is a light, and the second electronic component is an antenna. With this, the light is attached to the front wall of the fixing member and disposed in the space partitioned by the front wall and the upper wall, and the panel wall and the bottom wall of the rear bumper. The antenna is attached to the upper wall of the fixing member and disposed outside the partitioned space. This can prevent high-temperature air resulting from heat generated by the light from flowing toward the antenna.

It is preferable that the fixing member has two side walls that are separated from each other in a vehicle width direction and connect side edges of the front wall to side edges of the upper wall that are adjacent to the respective side edges of the front wall, and the two side walls each have a shape extending away from the panel wall while extending downward.

The front wall and the upper wall of the fixing member being connected by the side walls can increase the rigidity of the fixing member. The side wall having a shape extending away from the panel wall while extending downward allows high-temperature air around the light to be discharged from between the side wall and the panel wall.

### Working Examples

Hereinafter, a preferable embodiment of the present invention will be described in detail with reference to the attached drawings. Dimensions, materials, other specific values, and the like described in this embodiment are merely examples for facilitating understanding of the invention, and are not intended to limit the present invention unless stated otherwise. Note that in the present specification and drawings, elements having substantially the same functions and configurations are assigned the same reference numerals to omit redundant descriptions, and elements that are not directly related to the present invention are omitted in the drawings.

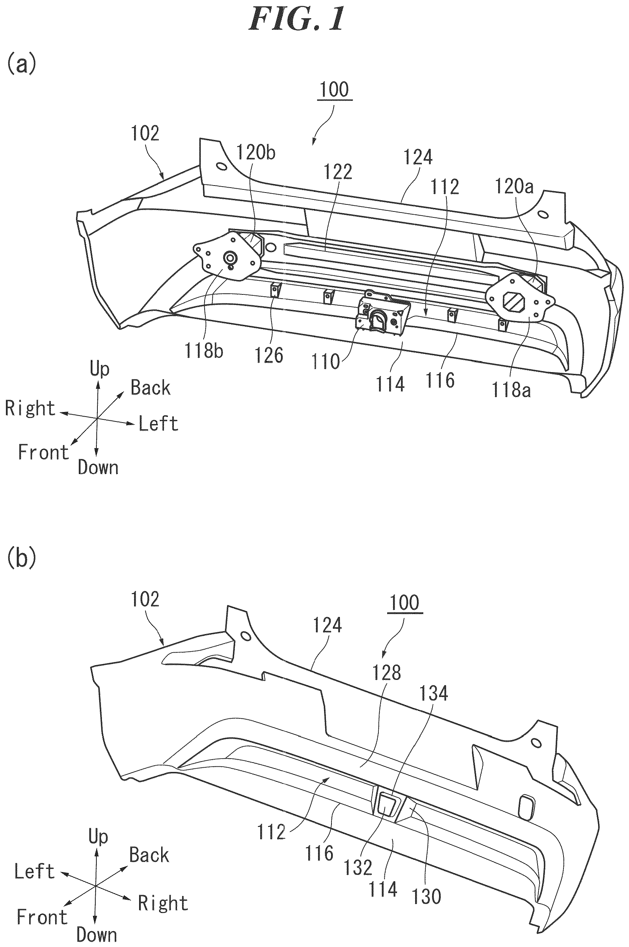

FIG. 1 shows an electronic component attachment structure for a vehicle 100 according to an example of the present invention. FIG. 1(a) shows the electronic component attachment structure for a vehicle 100 as viewed from the front side and obliquely above the vehicle. FIG. 1(b) shows the electronic component attachment structure for a vehicle 100 shown in FIG. 1(a) as viewed from the rear side and obliquely below the vehicle. In the following figures, front and back directions with respect to the vehicle are indicated by "Front" and "Back" arrows, the vehicle width direction is indicated by "Left" and "Right" arrows, and the vertical direction with respect to the vehicle is indicated by "Up" and "Down" arrows.

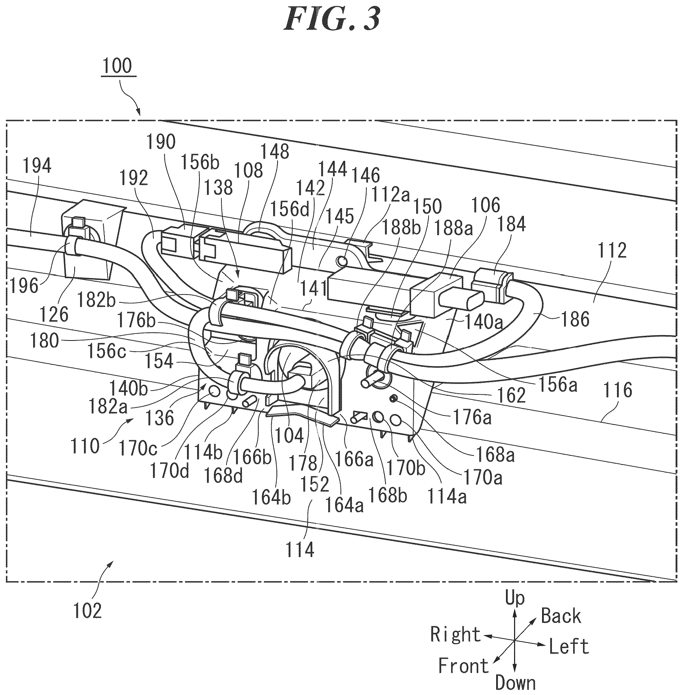

The electronic component attachment structure for a vehicle 100 includes a rear bumper 102 of a vehicle, a plurality of (here, three) electronic components 104, 106, and 108 shown in FIG. 3, and a fixing member 110. The rear bumper 102 is a resin member that is elongate in the vehicle width direction, and has a panel wall 112 and a bottom wall 114. The panel wall 112 extends in the vertical direction with respect to the vehicle and is arranged at the rear end of the vehicle. The bottom wall 114 extends from a lower end 116 of the panel wall 112 to the front side of the vehicle.

As an example, the rear end of the vehicle is constituted by members such as rear portions 118a and 118b of a rear side member shown in FIG. 1(a), back panel support sections 120a and 120b connected respectively to the rear portions 118a and 118b of the rear side member, and a rear bumper beam 122. The rear bumper beam 122 is a vehicle skeleton component, extends in the vehicle width direction between, and spans between the back panel support sections 120a and 120b. The fixing member 110 is disposed below the rear bumper beam 122. Note that a door opening 124, which is formed by the rear bumper 102, is located above the rear bumper beam 122.

As shown in FIG. 1(a), a plurality of (here, four) harness support sections 126 are formed on the panel wall 112 of the rear bumper 102 and arranged in the vehicle width direction on the left and right sides of the fixing member 110. Further, the panel wall 112 has a bent portion 128, which is bent to the front side of the vehicle while extending downward, a recessed portion 130, which is recessed to the front side of the vehicle, and a fog lamp cover opening 134, which exposes a fog lamp cover 132, as shown in FIG. 1(b). The fog lamp cover opening 134 is partitioned by the bent portion 128 and the recessed portion 130 and located at the center in the vehicle width direction.

The fixing member 110 is a member to which the plurality of electronic components 104, 106, and 108 are attached and that thus fixes the electronic components 104, 106, and 108 to the rear bumper 102 (see FIG. 3). Its detailed description is given below.

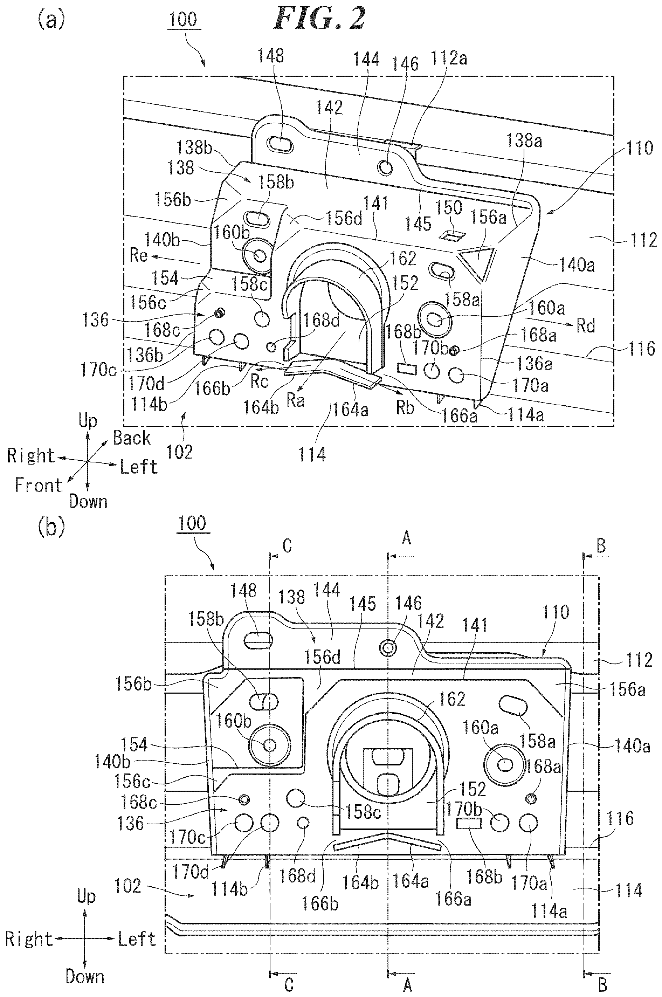

FIG. 2 shows a main part of the electronic component attachment structure for a vehicle 100 in FIG. 1. FIG. 2(a) shows an enlarged view of the fixing member 110 shown in FIG. 1 and the surrounding region. FIG. 2(b) shows the electronic component attachment structure for a vehicle 100 shown in FIG. 2(a) as viewed from the front side of the vehicle.

The fixing member 110 has a front wall 136, an upper wall 138, and two side walls 140a and 140b separated from each other in the vehicle width direction. The front wall 136 is separated, to the front side of the vehicle, from the panel wall 112 of the rear bumper 102 and faces the panel wall 112, and is joined to the bottom wall 114 via joint sections 114a and 114b provided on the bottom wall 114.

The upper wall 138 extends from an upper end 141 of the front wall 136 to the rear side of the vehicle, and connects the panel wall 112 and the front wall 136 by being joined to the panel wall 112 via a joint section 112a provided on the panel wall 112. Thus, a closed cross section can be formed in the electronic component attachment structure for a vehicle 100 by the panel wall 112 and the bottom wall 114 of the rear bumper 102 and the front wall 136 and the upper wall 138 of the fixing member 110.

The two side walls 140a and 140b respectively connect side edges 136a and 136b of the front wall 136 to side edges 138a and 138b of the upper wall 138 that are adjacent to the respective side edges 136a and 136b. This can increase the rigidity of the fixing member 110. Further, the two side walls 140a and 140b each have a shape extending away from the panel wall 112 while extending downward.

The upper wall 138 has a horizontal portion 142 that faces the bottom wall 114 of the rear bumper 102, and a flange portion 144. The flange portion 144 is bent from a rear edge 145 of the horizontal portion 142, and extends upward along the panel wall 112. The flange portion 144 has a panel joint section 146 that connects the upper wall 138 to the panel wall 112, and a fixing section 148 to which the electronic component 108 is fixed (see FIG. 3).

The horizontal portion 142 of the upper wall 138 has a fixing section 150 to which the electronic component 106 is fixed (see FIG. 3). The front wall 136 has an opening portion 152 provided at the center in the vehicle width direction, and a recess 154 that is recessed to the rear side of the vehicle. On the upper wall 138, the fixing section 148 of the flange portion 144 and the fixing section 150 of the horizontal portion 142 are arranged in the vehicle width direction with the panel joint section 146 therebetween.

The fixing member 110 also has tapered portions 156a, 156b, 156c, and 156d. The tapered portion 156a is formed at the corner of the front wall 136, the horizontal portion 142 of the upper wall 138, and the side wall 140a. The tapered portion 156b is formed at the corner of the recess 154 of the front wall 136, the horizontal portion 142 of the upper wall 138, and the side wall 140b. The tapered portion 156c is located below the tapered portion 156b and is formed at the corner of the front wall 136, the recess 154, and the side wall 140b. The tapered portion 156d is formed at the corner of the front wall 136, the recess 154, and the horizontal portion 142 of the upper wall 138. These tapered portions 156a, 156b, 156c, and 156d can increase the rigidity of the fixing member 110.

The front wall 136 has harness support sections 158a, 158b, and 158c. The harness support section 158a is formed near the tapered portion 156a. The harness support section 158b is formed in the recess 154 of the front wall 136. The harness support section 158c is located below the recess 154.

The front wall 136 has attachment holes 160a and 160b, which are used to fix the electronic component 104 (see FIG. 3) using an attachment jig (not shown). Note that the attachment hole 160b is formed in the recess 154 as shown in the figure.

The front wall 136 also has an edge rib 162 and guide ribs 164a and 164b. The edge rib 162 is disposed so as to surround the opening portion 152 of the front wall 136, but not on the lower side of the opening portion 152, and protrudes to the front side of the vehicle. The guide ribs 164a and 164b are disposed below the opening portion 152 and the edge rib 162 of the front wall 136, and protrude to the front side of the vehicle. The rigidity of the region around the opening portion 152 of the front wall 136 can thus be increased.

Gaps 166a and 166b are formed between the edge rib 162 and the guide ribs 164a and 164b, which are inclined downward while extending outward in the vehicle width direction to form an inverted V-shape.

The front wall 136 also has positioning sections 168a, 168b, 168c, and 168d, and front wall joint sections 170a, 170b, 170c, and 170d. The positioning sections 168a and 168b are used to position the joint section 114a provided on the bottom wall 114 of the rear bumper 102. The front wall joint sections 170a and 170b joins the positioned joint section 114a of the bottom wall 114 to the front wall 136. Note that the joint section 114a of the bottom wall 114 can be positioned and joined to the front wall 136 by using either the positioning section 168a and the front wall joint section 170a or the positioning section 168b and the front wall joint section 170b.

The positioning sections 168c and 168d are used to position the joint section 114b provided on the bottom wall 114 of the rear bumper 102. The front wall joint sections 170c and 170d connect the positioned joint section 114b of the bottom wall 114 to the front wall 136. Note that the joint section 114b of the bottom wall 114 can be positioned and joined to the front wall 136 by using either the positioning section 168c and the front wall joint section 170c or the positioning section 168d and the front wall joint section 170d.

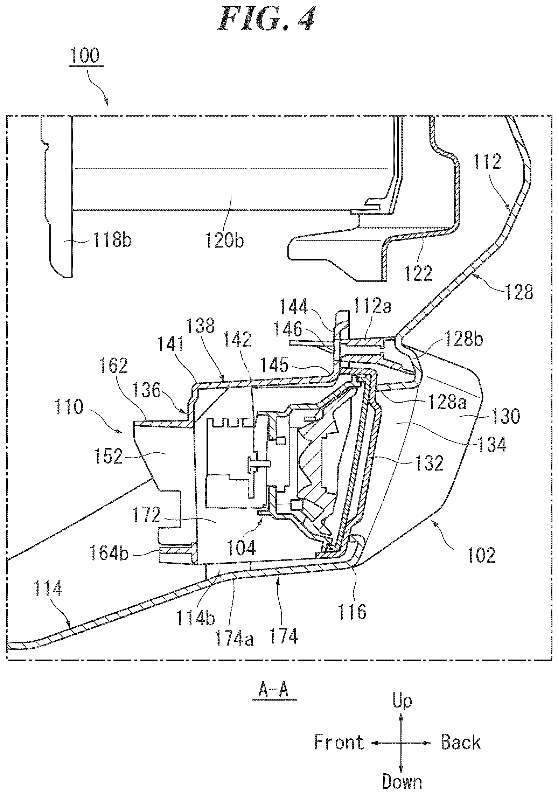

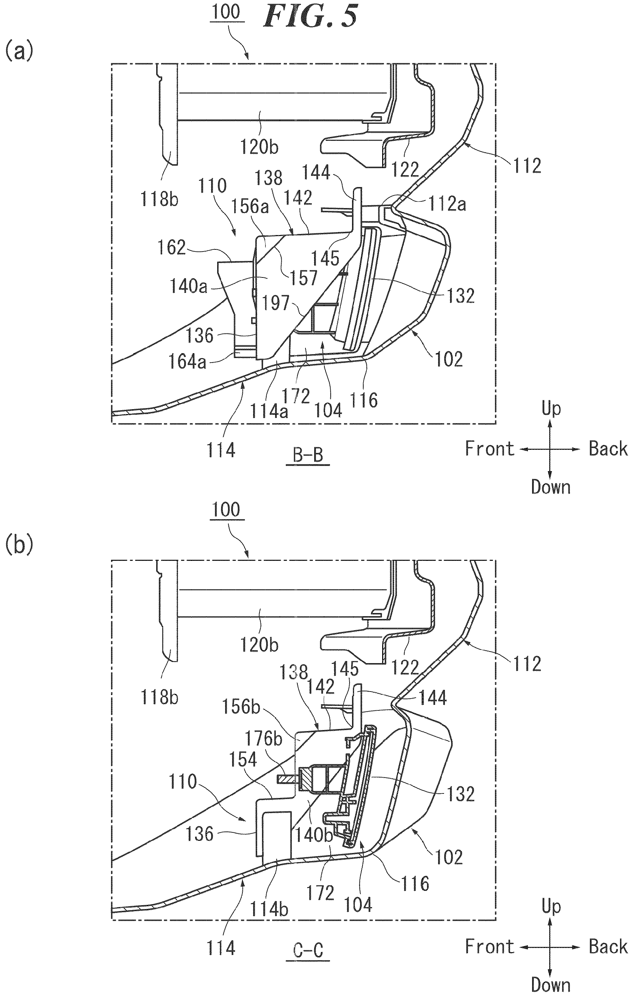

FIG. 3 shows the fixing member 110 shown in FIG. 2(a) with the plurality of electronic components 104, 106, and 108 attached thereto. FIG. 4 is an A-A cross-sectional view of the electronic component attachment structure for a vehicle 100 shown in FIG. 2(b). FIG. 5 shows other cross-sectional views of the electronic component attachment structure for a vehicle 100 shown in FIG. 2(b).

The electronic component 104 is a light (here, a fog lamp) and is disposed in a space 172 partitioned by the front wall 136 and the upper wall 138 of the fixing member 110 and the panel wall 112 and bottom wall 114 of the rear bumper 102, as shown in FIG. 4.

The electronic component 104, which is a fog lamp, generates heat during use, and the temperature of the air surrounding it thus becomes high. The high-temperature air is discharged from the space 172 to the outside through paths Ra, Rb, Rc, Rd, and Re shown in FIG. 2(a). The path Ra is a path passing through the opening portion 152 from the space 172. The paths Rb and Rc are paths passing through the gaps 166a and 166b between the edge rib 162 and the guide ribs 164a and 164b and extending outward in the vehicle width direction along the guide ribs 164a and 164b, respectively.

Since the two side walls 140a and 140b each have a shape extending away from the panel wall 112 while extending downward as shown in the B-B cross-sectional view in FIG. 5(a) and the C-C cross-sectional view in FIG. 5(b), the spaces between the side walls 140a and 140b, the panel wall 112 and the bottom wall 114 communicate with the space 172 in which the electronic component 104 is disposed. That is, the paths Rd and Re are paths that extend from within the space 172, pass between the side walls 140a and 140b, the panel wall 112, and the bottom wall 114, and extend outward in the vehicle width direction from below the side walls 140a and 140b, respectively. The high-temperature air resulting from the heat generated by the electronic component 104 can thus be reliably discharged from within the space 172 to the outside. Note that the electronic component 104 may alternatively be an electronic component such as a light other than a fog lamp, a sensor, or a control unit for an in-vehicle component or the like.

When the flange portion 144 of the upper wall 138 of the fixing member 110 is joined by the panel joint section 146, the joint section 112a provided on the panel wall 112 serves as a bearing surface to which the fixing member 110 is connected, as shown in FIG. 4. The bent portion 128 of the panel wall 112 is bent to the front side of the vehicle while extending downward as shown in FIG. 4, and a lower end 128a of the bent portion 128 extends to the fog lamp cover opening 134. Note that the fog lamp cover 132 exposed from the fog lamp cover opening 134 is fixed to the electronic component 104. The bent portion 128 has a deformed portion 128b, which is bent to the rear side of the vehicle near the lower end 128a. The joint section 112a of the panel wall 112 is provided on the deformed portion 128b of the bent portion 128.

The joint section 114b of the bottom wall 114 shown in FIG. 4 serves as a bearing surface when the front wall 136 of the fixing member 110 is joined by the front wall joint sections 170c and 170d. The bottom wall 114 has a curved portion 174, which is curved to the lower side of the vehicle while extending from the lower end 116 of the panel wall 112 to the front side of the vehicle. The curved portion 174 has a deformed portion 174a, which is curved more than the surrounding area. The joint section 114b of the bottom wall 114 is provided at the deformed portion 174a of the curved portion 174.

With such a rear bumper 102, it is possible to suppress the occurrence of a sink mark between the outside and the inside of a resin material during resin molding using a mold. Further, the joint areas between the joint section 112a of the panel wall 112 that serves as a mount and a corresponding face and between the joint section 114b of the bottom wall 114 and a corresponding face increase, thus allowing the fixing member 110 to be stably joined. The joint sections 112a and 114b reinforce the deformed portion 128b of the bent portion 128 and the deformed portion 174a of the curved portion 174, respectively, and deformation of the rear bumper 102 can thus be suppressed when an external force acts on the rear bumper 102. This can suppress displacement of the fixing member 110 and allow each harness (described later) shown in FIG. 3 to avoid contact with nearby members. Although the joint sections 112a and 114b include the respective deformed portions 128b and 174a, this need not be the case. Either one of, or both the joint sections 112a and 114b may be provided at locations different from the deformed portions 128b and 174a.

The fixing member 110 is disposed on the front side of the vehicle relative to the deformed portion 128b of the bent portion 128 of the panel wall 112 and the rear bumper beam 122 of the rear bumper 102. This allows an external force to be released to the rear bumper 102 and the rear bumper beam 122 when the external force is applied, and can suppress a load transmitted to the fixing member 110. Further, the panel wall 112 including the recessed portion 130 can prevent an external force from being transmitted to the fixing member 110 in case of rear collision.

In the fixing member 110 shown in FIG. 3, the electronic component 104 is fixed to the front wall 136 by bolts 176a and 176b inserted into the attachment holes 160a and 160b (see FIG. 2), respectively, in the front wall 136. The electronic component 104 is connected to a harness 180 via a connector 178. The harness 180 is drawn out from the opening portion 152 and supported by a support member 182a attached to the harness support section 158c of the front wall 136 shown in FIG. 2, and a support member 182b attached to the harness support section 158b.

The electronic component 106 is a keyless antenna and is fixed to the fixing section 150 of the horizontal portion 142 of the upper wall 138. The electronic component 106 is connected to a harness 186 via a connector 184. Note that the figure shows an example where the connector 184 is detached from the electronic component 106. The harness 186 is supported by support members 188a and 188b attached to the harness support sections 158a of the front wall 136 shown in FIG. 2. Note that the electronic component 106 may alternatively be, for example, an antenna other than a keyless antenna, a sensor, a lamp, or a control unit for an in-vehicle component or the like.

The electronic component 108 is a BLE (Bluetooth Low Energy; Bluetooth is a registered trademark) antenna, and is fixed to the fixing section 148 of the flange portion 144 of the upper wall 138. The electronic component 108 is connected to a harness 192 via a connector 190. The harness 192 is supported by the support member 182b, as shown in the figure. These harnesses 180, 186 and 192 are connected to a harness 194 laid out in the vehicle width direction. The harness 194 is supported by a support member 196 attached to the harness support section 126 of the panel wall 112. Note that the electronic component 108 may alternatively be an electronic component such as an antenna other than a BLE antenna, a sensor, a lamp, or a control unit for an in-vehicle component or the like.

In the electronic component attachment structure for a vehicle 100, the plurality of electronic components 104, 106, and 108 are attached to one fixing member 110 fixed to the rear bumper 102, as described above. The overall length of the harnesses 180, 186, and 192 connected to the respective electronic components 104, 106, and 108 can thus be shortened. This can reduce the areas of the harnesses 180, 186, and 192 that are subjected to an external force, and suppress damage of the harnesses 180, 186, and 192. Further, since the attaching points of the electronic components 104, 106, and 108 are set on one fixing member 110, workability in attaching the electronic components 104, 106, and 108 is improved. Further, the number of the fixing points of the electronic components 104, 106, and 108 and the fixing points of the harnesses 180, 186, 192 to the rear bumper 102 can be reduced, and the cost can thus be reduced as well.

In the electronic component attachment structure for a vehicle 100, the electronic component 106 is attached to the horizontal portion 142 of the upper wall 138 of the fixing member 110, and the electronic component 108 is attached to the flange portion 144 of the upper wall 138. This allows the electronic components 106 and 108 to be attached in different orientations. The electronic components 106 and 108 can thus be prevented from coming into contact with each other when subjected to an external force.

Even if an external force acts on either one of the horizontal portion 142 and the flange portion 144 of the upper wall 138, part of the external force transmitted to the other one of the horizontal portion 142 or the flange portion 144 can be absorbed by deforming the fixing member 110. This suppresses displacement of the electronic component 106 or 108 attached to the other one of the horizontal portion 142 and the flange portion 144 of the upper wall 138, thus facilitating protection of this electronic component 106 or 108.

As shown in FIG. 3, the electronic components 106 and 108 are arranged in the vehicle width direction with the panel joint section 146 of the flange portion 144 therebetween. With this, even if the region around the panel joint section 146 of the flange portion 144 is subjected to an external force and deformed, contact between the electronic components 106 and 108 can be prevented, and breakage of the electronic components 106 and 108 can be prevented.

The flange portion 144 of the upper wall 138 extends from the panel joint section 146 toward the electronic component 108. With this, even if an external force from the panel wall 112 of the rear bumper 102 is transmitted to the flange portion 144 via the panel joint section 146 of the fixing member 110, the external force is absorbed as a result of deformation of the rear edge 145 of the horizontal portion 142 that serves as a boundary between the flange portion 144 and the horizontal portion 142, and the region around the rear edge 145. Further, the flange portion 144 does not extend toward the electronic component 106 attached to the horizontal portion 142 of the upper wall 138. This make it unlikely for an external force to be transmitted to the horizontal portion 142 of the upper wall 138 and facilitates protection of the electronic component 106.

Further, the tapered portions 156a, 156b, 156c, and 156d of the fixing member 110 having increased rigidity are located at the corner portions of the fixing member 110, as shown in FIG. 2. With this, when the fixing member 110 is displaced, the tapered portions 156a, 156b, 156c, and 156d tend to come into area contact with nearby members, and a load transmitted to the fixing member 110 can be suppressed.

In the fixing member 110, an edge 157 of the tapered portion 156a and an edge 197 of the side wall 140a are inclined substantially parallel with each other, as shown in FIG. 5(a). This can suppress deformation of the fixing member 110 when subjected to an external force.

Further, in the fixing member 110, the electronic component 104 is fixed to the recess 154 of the front wall 136 through the bolt 176b, as shown in FIG. 5(b). This can increase the rigidity of the fixing member 110, and also allows the electronic component 104 to be fixed to the fixing member 110 in an orientation in which the direction of light emitted from the electronic component 104, which is a fog lamp, is directed to the rear side of the vehicle.

In the electronic component attachment structure for a vehicle 100, the electronic component 104 is disposed in the space 172 partitioned by the fixing member 110 and the rear bumper 102, and the electronic components 106 and 108 are disposed outside the space 172. The electronic component 104 is thus separated from the electronic components 106 and 108 by the fixing member 110. This allows the electronic component 104 to avoid interference with the electronic components 106 and 108, and facilitates protection of the electronic component 104 or the electronic components 106 and 108 even when the fixing member 110 is subjected to an external force and deformed.

Note that the nearby members in this example include other members disposed around the fixing member 110. In the electronic component attachment structure for a vehicle 100, displacement of the electronic components 104, 106, and 108 is suppressed as described above, contact between these electronic components 104, 106, and 108 and other members around the fixing member 110 can thus be avoided.

In the electronic component attachment structure for a vehicle 100, the electronic component 104 is a fog lamp that generates heat, and the electronic components 106 and 108 are antennas. The electronic component 104 is therefore separated from the electronic components 106 and 108 by the fixing member 110, and high-temperature air resulting from heat generated by the electronic component 104 is discharged to the outside through the paths Ra, Rb, Rc, Rd, and Re shown in FIG. 2. The high-temperature air can thus be prevented from flowing toward the antennas.

Note that in the above-described electronic component attachment structure for a vehicle 100, the electronic component 104 is fixed to the front wall 136 of the fixing member 110, the electronic component 106 is fixed to the horizontal portion 142 of the upper wall 138, and the electronic component 108 is fixed to the flange portion 144 of the upper wall 138. However, this need not be the case.

As an example, an alternative configuration may be employed in which the electronic component 104 is not fixed to the fixing member 110, the electronic component 106 is fixed to the upper wall 138 or the horizontal portion 142, and the electronic component 108 is fixed to the flange portion 144. In this case, the electronic component 106 may be disposed on the front side or the rear side of the upper wall 138 or on the upper side or the lower side of the horizontal portion 142. Alternatively, a configuration may be employed in which the electronic component 108 is not fixed to the fixing member 110, the electronic component 104 is fixed to either the front wall 136 or the upper wall 138, and the electronic component 106 is fixed to the front wall 136, or the horizontal portion 142 or the flange portion 144 of the upper wall 138. Further, an alternative configuration may be employed in which the electronic component 106 is not fixed to the fixing member 110, the electronic component 104 is fixed to either one of the front wall 136 and the horizontal portion 142 of the upper wall 138, and the electronic component 108 is fixed to the flange portion 144 of the upper wall 138 or the other one of the front wall 136 and the horizontal portion 142.

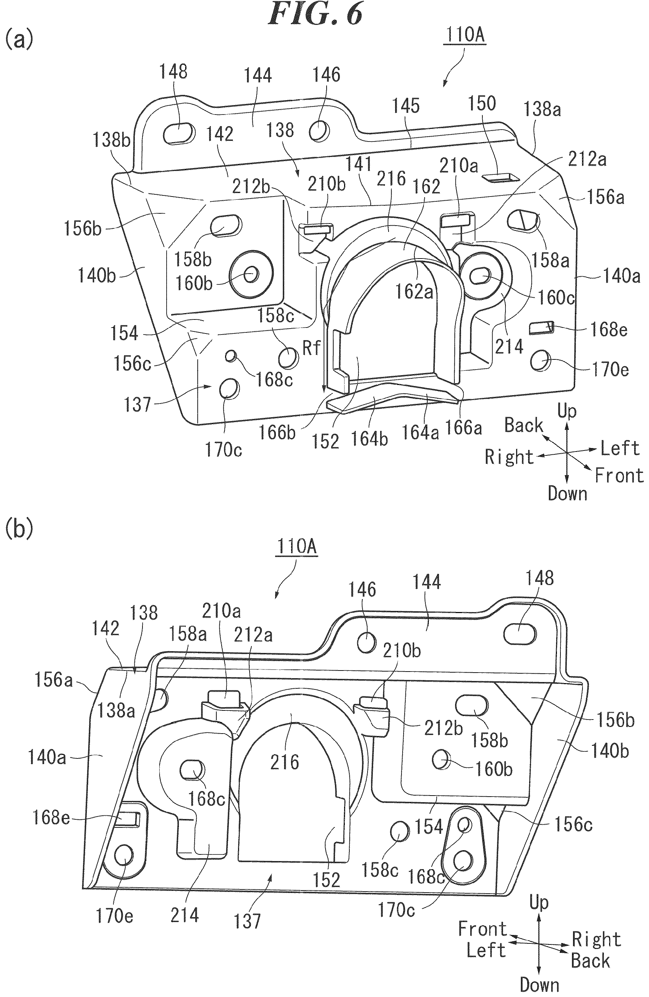

FIG. 6 illustrates a variation of the fixing member 110 shown in FIG. 2. FIGS. 6(a) and 6(b) are perspective views of a fixing member 110A of the variation as viewed from the rear side of the vehicle and from the front side of the vehicle, respectively.

The fixing member 110A is different from the above-described fixing member 110 mainly in that its front wall 137 has two exhaust ports 210a and 210b, two first recessed portions 212a and 212b, a second recessed portion 214, and a bulging portion 216.

The exhaust ports 210a and 210b are formed above the opening portion 152 serving as a harness draw-out opening from which the harness 180 (see FIG. 3) is drawn out. With this, in the fixing member 110A, high-temperature air resulting from heat generated by the electronic component 104, which is a fog lamp, and staying in the space 172 (see FIGS. 4 and 5), e.g. near the upper wall 138, can be discharged from within the space 172 to the outside.

The first recessed portion 212a is located below the exhaust port 210a, is recessed to the rear side of the vehicle, and is located on the rear side of the vehicle relative to the exhaust port 210a. The first recessed portion 212b is located below the exhaust port 210b, is recessed to the rear side of the vehicle, and is located on the rear side of the vehicle relative to the exhaust port 210b. With this, even if rainwater or the like drips onto the upper wall 138 or the like in the fixing member 110A, the rainwater or the like can be prevented from going around toward the exhaust ports 210a and 210b.

The first recessed portion 212b is connected to the recess 154, as shown in FIG. 6(a). This can increase the rigidity of the region around the first recessed portion 212b and the recess 154 in the fixing member 110a.

Here, a larger current flows through the electronic component 104, which is a fog lamp, than the current that flows through sensors such as the electronic component 108, which is a BLE antenna, and the electronic component 106, which is a keyless antenna. Rainwater thus needs to be prevented from flowing into the electronic component 104.

The edge rib 162 is formed in an inverted U-shape so as to surround the opening portion 152 of the front wall 137, but not on the lower side of the opening portion 152, and protrudes to the front side of the vehicle. With the fixing members 110 and 110A having the edge rib 162, it is easier for rainwater falling from above to flow in a direction away from the harness 180 (see FIG. 3), as indicated by a path Rf. Note that the edge rib 162 is not limited to having a curved shape, and may alternatively have a linearly inclined shape, like the shape of the guide ribs 164a and 164b.

The second recessed portion 214 of the fixing member 110A is a portion that is joined to the first recessed portion 212a and recessed to the rear side of the vehicle, as shown in FIG. 6(b). Since the fixing member 110A has the second recessed portion 214, it is possible to increase the thickness of the front wall 137 and increase the rigidity of the front wall 137 and the surrounding region. The first recessed portion 212a and the second recessed portion 214 being joined to each other can further increase the rigidity.

The bulging portion 216 is a portion that bulges to the front side of the vehicle along a base end portion 162a of the edge rib 162, as shown in FIG. 6(a). The bulging portion 216 can thus increase the rigidity of the edge rib 162 and the surrounding region in the fixing member 110A. Further, a part of the bulging portion 216 is connected to the first recessed portions 212a and 212b, and can further increase the rigidity.

Note that in the fixing member 110A, a positioning section 168e and the front wall joint section 170e of the front wall 137 allow the joint section 114a of the bottom wall 114 of the rear bumper 102 to be positioned and joined to the front wall 137.

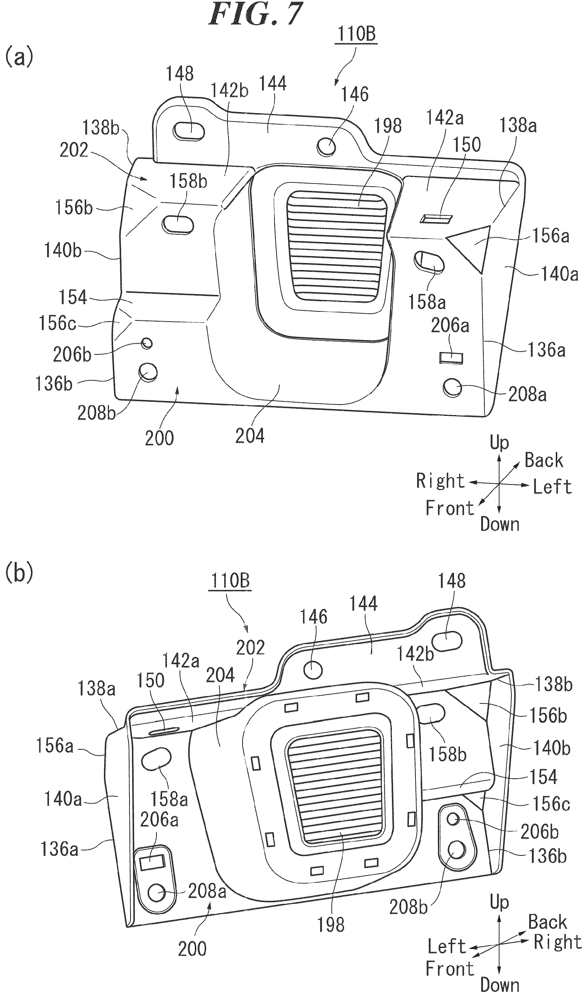

FIG. 7 illustrates another variation of the fixing member 110 shown in FIG. 2. FIGS. 7(a) and 7(b) are perspective views of a fixing member 110B of the other variation as viewed from the rear side of the vehicle and from the front side of the vehicle, respectively.

As an example, the fixing member 110B is used when heat generated by the electronic component 104 does not affect the electronic components 106 and 108, which are antennas. The fixing member 110B is different from the above-described fixing member 110 mainly in that a fog lamp cover 198 is integrated with or attached to the fixing member 110B, and that the fixing member 110B has a housing section 204 that stretches between the front wall 200 and the upper wall 202 and houses the electronic component 104.

According to this fixing member 110B, the electronic component 104 is housed in and fixed to the housing section 204, the electronic component 106 is fixed to the fixing section 150 of the horizontal portion 142a, and the electronic component 108 is fixed to the fixing section 148 of the flange portion 144 that is bent from the horizontal portion 142b and extends upward, thus allowing the electronic components 104, 106, and 108 to be fixed from the front side of the vehicle. It is thus possible to improve workability in attaching the plurality of electronic components 104, 106, and 108 to the fixing member 110B and laying out the harness drawn out from each electronic component.

Note that in the fixing member 110B, the electronic components 106 and 108 can be separated by the wall of the housing section 204 by fixing the electronic components 106 and 108 to the front wall 200 on the left and right sides or to left and right horizontal portions 142a and 142b, respectively, with the housing section 204 disposed between the electronic components 106 and 108 such that the electronic components 106 and 108 are located in the back of the front wall 200 on the left and right sides, respectively.

In the fixing member 110B, the joint sections 114a and 114b of the bottom wall 114 of the rear bumper 102 can be positioned and joined to the front wall 200 by positioning sections 206a and 206b and front wall joint sections 208a and 208b of the front wall 200.

Although a preferable example of the present invention has been described above with reference to the attached drawings, the present invention is, needless to say, not limited to the above-described example. It is apparent that a person skilled in the art may conceive various variations and modifications within the scope of the claims, and those variations and modifications should be understood to be naturally encompassed in the technical scope of the present invention.

### [Industrial Applicability]

The present invention can be used in an electronic component attachment structure for a vehicle.

### [Index to the Reference Numerals]

100 ... Electronic component attachment structure for a vehicle;
102 ... Rear bumper;
104, 106, 108 ... Electronic component;
110, 110A, 110B ... Fixing member;
112 ... Panel wall;
114 ... Bottom wall;
114a, 114b ... Joint section of bottom wall;
116 ... Lower end of panel wall;
118a, 118b ... Rear portion of rear side member;
120a, 120b ... Back panel support section;
122 ... Rear bumper beam;
124 ... Door opening;
126 ... Harness support section of panel wall;
128 ... Bent portion;
128a ... Lower end of bent portion;
128b ... Deformed portion of bent portion;
130 ... Recessed portions;
132, 198 ... Fog lamp cover;
134 ... Fog lamp cover opening;
136, 137, 200 ... Front wall;
136a, 136b ... Side edge of front wall;
138, 202 ... Upper wall;
138a, 138b ... Side edge of upper wall;
140a, 140b ... Side wall;
141 ... Upper end of front wall;
142, 142a, 142b ... Horizontal portion;
144 ... Flange portion;
146 ... Panel joint section;
148, 150 ... Fixing section;
152 ... Opening portion of front wall;
154 ... Recess;
156a, 156b, 156c, 156d ... Tapered portion;
157 ... Edge of tapered portion;
158a, 158b, 158c ... Harness support section of front wall;
160a, 160b, 160c ... Attachment hole;
162 ... Edge rib;
162a ... Base end portion of edge rib;
164a, 164b ... Guide rib;
166a, 166b ... Gap;
168a, 168b, 168c, 168d, 168e, 206a, 206b ... Positioning section;
170a, 170b, 170c, 170d, 170e, 208a, 208b ... Front wall joint section;
172 ... Space;
174 ... Curved portion of bottom wall;
174a ... Deformed portion of curved portion;
176a, 176b ... Bolt;
178, 184, 190 ... Connector;
180, 186, 192, 194... Harness;
182a, 182b, 188a, 188b, 196 ... Support member;
197 ... Edge of side wall;
204 ... Housing section;
210a, 210b ... Exhaust port;
212a, 212b **...** First recessed portion;
214 ... Second recessed portion;
216 ... Bulging portion

## Claims

1. An electronic component attachment structure for a vehicle (100) comprising:
a rear bumper (102) of the vehicle;
a plurality of electronic components (104, 106, 108); and
a fixing member (110, 110A, 110B) fixing the plurality of electronic components (104, 106, 108) to the rear bumper (102),
wherein the rear bumper (102) has:
a panel wall (112) arranged at a rear end of the vehicle; **characterized in that**
a bottom wall (114) extending from a lower end (116) of the panel wall (112) to a front side of the vehicle, and
the fixing member (110, 110A, 110B) has:
a front wall (136, 137, 200) disposed so as to be separated, to the front side of the vehicle, from the panel wall (112) and to face the panel wall (112), the front wall (136, 137, 200) being joined to the bottom wall (114); and
an upper wall (138, 202) extending from an upper end (141) of the front wall (136, 137, 200) to the rear side of the vehicle and joined to the panel wall (112), the upper wall (138, 202) linking the panel wall (112) to the front wall (136, 137, 200).

2. The electronic component attachment structure for a vehicle (100) according to claim 1,
wherein the plurality of electronic components (104, 106, 108) include a first electronic component (104) and a second electronic component (106, 108), and
the first electronic component (104) is attached to the front wall (136, 137, 200) of the fixing member (110, 110A, 110B), and the second electronic component (106, 108) is attached to the upper wall (138, 202).

3. The electronic component attachment structure for a vehicle (100) according to claim 1,
wherein the plurality of electronic components (104, 106, 108) include a first electronic component (104) and a second electronic component (106, 108), and
the first and second electronic components (104, 106, 108) are attached to either one of the front wall (136, 137, 200) and the upper wall (138, 202) of the fixing member (110, 110A, 110B) in different orientations.

4. The electronic component attachment structure for a vehicle (100) according to claim 2 or 3,
wherein at least one of the plurality of electronic components (104, 106, 108) is attached to the front wall (136, 137, 200) of the fixing member (110, 110A, 110B), and each remaining electronic component (104, 106, 108) other than the at least one is attached to the upper wall (138, 202).

5. The electronic component attachment structure for a vehicle (100) according to claim 2 or 3,
wherein the upper wall (138, 202) has:
a horizontal portion (142, 142a, 142b) facing the bottom wall (114); and
a flange portion (144) bent from the horizontal portion (142, 142a, 142b) and extending upward along the panel wall (112), and
the first electronic component (104) is attached to the horizontal portion (142, 142a, 142b), the second electronic component (106, 108) is attached to the flange portion (144), and the first and second electronic components (104, 106, 108) are attached in different orientations.

6. The electronic component attachment structure for a vehicle (100) according to claim 5,
wherein the upper wall (138, 202) has a panel joint section (146) joining the upper wall (138, 202) to the panel wall (112), and
the first and second electronic components (104, 106, 108) are arranged in a vehicle width direction with the panel joint section (146) therebetween.

7. The electronic component attachment structure for a vehicle (100) according to claim 2 or 3,
wherein the upper wall (138, 202) has:
a horizontal portion (142, 142a, 142b) facing the bottom wall (114); and
a flange portion (144) bent from the horizontal portion (142, 142a, 142b) and extending upward along the panel wall (112), and
the first electronic component (104) is attached to the front wall (136, 137, 200), and the second electronic component (106, 108) is attached to the flange portion (144) of the upper wall (138, 202).

8. The electronic component attachment structure for a vehicle (100) according to claim 7,
wherein the panel joint section (146) joins the flange portion (144) to the panel wall (112), and
the flange portion (144) extends from the panel joint section (146) toward the second electronic component (106, 108).

9. The electronic component attachment structure for a vehicle (100) according to claim 2 or 3,
wherein the first electronic component (104) is attached to the front wall (136, 137, 200) of the fixing member (110, 110A, 110B), and the second electronic component (106, 108) is attached to the upper wall (138, 202),
the first electronic component (104) is disposed in a space (172) partitioned by the front wall (136, 137, 200), the upper wall (138, 202), the panel wall (112), and the bottom wall (114), and
the second electronic component (106, 108) is disposed outside the space (172).

10. The electronic component attachment structure for a vehicle (100) according to claim 9,
wherein the first electronic component (104) is a light, and
the second electronic component (106, 108) is an antenna.

11. The electronic component attachment structure for a vehicle (100) according to claim 10,
wherein the fixing member (110, 110A, 110B) has two side walls (140a, 140b) that are separated from each other in a vehicle width direction and connect side edges (136a, 136b) of the front wall (136, 137, 200) to side edges (138a, 138b) of the upper wall (138, 202) that are adjacent to the respective side edges (136a, 136b) of the front wall (136, 137, 200), and
the two side walls (140a, 140b) each have a shape extending away from the panel wall (112) while extending downward.

## Patentansprüche

1. Anbringungsstruktur für elektronische Komponenten für ein Fahrzeug (100), umfassend:
eine hintere Stoßstange (102) des Fahrzeugs;
eine Mehrzahl elektronischer Komponenten (104, 106, 108); und
ein Befestigungselement (110, 110A, 110B), welches die Mehrzahl elektronischer Komponenten (104, 106, 108) an der hinteren Stoßstange (102) befestigt,
wobei die hintere Stoßstange (102) aufweist:
eine Paneelwand (112), welche an dem hinteren Ende des Fahrzeugs angeordnet ist; **dadurch gekennzeichnet, dass**
sich eine untere Wand (114) von einem unteren Ende (116) der Paneelwand (112) zu einer vorderen Seite des Fahrzeugs erstreckt, und
das Befestigungselement (110, 110A, 110B) aufweist:
eine vordere Wand (136, 137, 200), welche derart angeordnet ist, dass sie, zu der vorderen Seite des Fahrzeugs, von der Paneelwand (112) getrennt ist und der Paneelwand (112) zugewandt ist, wobei die vordere Wand (136, 137, 200) mit der unteren Wand (114) verbunden ist; und
eine obere Wand (138, 202), welche sich von einem oberen Ende (141) der vorderen Wand (136, 137, 200) zu der hinteren Seite des Fahrzeugs erstreckt und mit der Paneelwand (112) verbunden ist, wobei die obere Wand (138, 202) die Paneelwand (112) mit der vorderen Wand (136, 137, 200) koppelt.

2. Anbringungsstruktur für elektronische Komponenten für ein Fahrzeug (100) nach Anspruch 1,
wobei die Mehrzahl elektronischer Komponenten (104, 106, 108) eine erste elektronische Komponente (104) und eine zweite elektronische Komponente (106, 108) umfasst, und
wobei die erste elektronische Komponente (104) an der vorderen Wand (136, 137, 200) des Befestigungselements (110, 110A, 110B) angebracht ist und die zweite elektronische Komponente (106, 108) an der oberen Wand (138, 202) angebracht ist.

3. Anbringungsstruktur für elektronische Komponenten für ein Fahrzeug (100) nach Anspruch 1,
wobei die Mehrzahl elektronischer Komponenten (104, 106, 108) eine erste elektronische Komponente (104) und eine zweite elektronische Komponente (106, 108) umfasst, und
wobei die erste und die zweite Komponente (104, 106, 108) in unterschiedlichen Orientierungen an einer aus der vorderen Wand (136, 137, 200) und der oberen Wand (138, 202) des Befestigungselements (110, 110A, 110B) angebracht sind.

4. Anbringungsstruktur für elektronische Komponenten für ein Fahrzeug (100) nach Anspruch 2 oder 3,
wobei wenigstens eine aus der Mehrzahl elektronischer Komponenten (104, 106, 108) an der vorderen Wand (136, 137, 200) des Befestigungselement (110, 110A, 110B) angebracht ist und jede übrige elektronische Komponente (104, 106, 108), welche sich von der wenigstens einen unterscheidet, an der oberen Wand (138, 202) angebracht ist.

5. Anbringungsstruktur für elektronische Komponenten für ein Fahrzeug (100) nach Anspruch 2 oder 3,
wobei die obere Wand (138, 202) aufweist:
einen horizontalen Abschnitt (142, 142a, 142b), welcher der unteren Wand (114) zugewandt ist; und
einen Flanschabschnitt (144), welcher von dem horizontalen Abschnitt (142, 142a, 142b) gebogen ist und sich entlang der Paneelwand (112) nach oben erstreckt, und
wobei die erste elektronische Komponente (104) an den horizontalen Abschnitt (142, 142a, 142b) angebracht ist, die zweite elektronische Komponente (106, 108) an dem Flanschabschnitt angebracht ist und die erste und die zweite elektronische Komponente (104, 106, 108) in unterschiedlichen Orientierungen angebracht sind.

6. Anbringungsstruktur für elektronische Komponenten für ein Fahrzeug (100) nach Anspruch 5,
wobei die obere Wand (138, 202) einen Paneelverbindungsabschnitt (146) aufweist, welcher die obere Wand (138, 202) mit der Paneelwand (112) verbindet, und
die erste und die zweite elektronische Komponente (104, 106, 108) in einer Fahrzeugbreitenrichtung mit dem Paneelverbindungsabschnitt (146) dazwischen angeordnet sind.

7. Anbringungsstruktur für elektronische Komponenten für ein Fahrzeug (100) nach Anspruch 2 oder 3,
wobei die obere Wand (138, 202) aufweist:
einen horizontalen Abschnitt (142, 142a, 142b), welcher der unteren Wand (114) zugewandt ist; und
einen Flanschabschnitt (144), welcher von dem horizontalen Abschnitt (142, 142a, 142b) gebogen ist und sich entlang der Paneelwand (112) nach oben erstreckt, und
wobei die erste elektronische Komponente (104) an der vorderen Wand (136, 137, 200) angebracht ist und die zweite elektronische Komponente (106, 108) an dem Flanschabschnitt (144) der oberen Wand (138, 202) angebracht ist.

8. Anbringungsstruktur für elektronische Komponenten für ein Fahrzeug (100) nach Anspruch 7,
wobei der Paneelverbindungsabschnitt (146) den Flanschabschnitt (144) mit der Paneelwand (112) verbindet, und
wobei sich der Flanschabschnitt (144) von dem Paneelverbindungsabschnitt (146) in Richtung der zweiten elektronischen Komponente (106, 108) erstreckt.

9. Anbringungsstruktur für elektronische Komponenten für ein Fahrzeug (100) nach Anspruch 2 oder 3,
wobei die erste elektronische Komponente (104) an der vorderen Wand (136, 137, 200) des Befestigungselements (110, 110A, 110B) angebracht ist und die zweite elektronische Komponente (106, 108) an der oberen Wand (138, 202) angebracht ist,
wobei die erste elektronische Komponente (104) in einem Raum (172) angeordnet ist, welcher durch die vordere Wand (136, 137, 200), die obere Wand (138, 202), die Paneelwand (112) und die untere Wand (114) geteilt ist, und
wobei die zweite elektronische Komponente (106, 108) außerhalb des Raums (172) angeordnet ist.

10. Anbringungsstruktur für elektronische Komponenten für ein Fahrzeug (100) nach Anspruch 9,
wobei die erste elektronische Komponente (104) ein Licht ist, und
wobei die zweite elektronische Komponente (106, 108) eine Antenne ist.

11. Anbringungsstruktur für elektronische Komponenten für ein Fahrzeug (100) nach Anspruch 10,
wobei das Befestigungselement (110, 110A, 110B) zwei Seitenwände (140a, 140b) aufweist, welche voneinander in einer Fahrzeugbreitenrichtung voneinander getrennt sind und Seitenränder (136a, 136b) der vorderen Wand (136, 137, 200) mit Seitenrändern (138a, 138b) der oberen Wand (138, 202) zusammenfügen, welche zu den jeweiligen Seitenrändern (136a, 136b) der vorderen Wand (136, 137, 200) benachbart sind, und
wobei die beiden Seitenwände (140a, 140b) jeweils eine Form aufweisen, welche sich, während sie sich nach unten erstreckt, von der Paneelwand (112) weg erstreckt.

## Revendications

1. Structure de fixation de composants électroniques pour un véhicule (100) comprenant :
un pare-chocs arrière (102) du véhicule ;
une pluralité de composants électroniques (104, 106, 108) ; et
un organe de fixation (110, 110A, 110B) fixant la pluralité de composants électroniques (104, 106, 108) au pare-chocs arrière (102),
dans laquelle le pare-chocs arrière (102) présente :
une paroi de panneau (112) agencée à une extrémité arrière du véhicule ; **caractérisée en ce que**
une paroi inférieure (114) s'étend d'une extrémité inférieure (116) de la paroi de panneau (112) à un côté avant du véhicule, et
l'organe de fixation (110, 110A, 110B) présente :
une paroi avant (136, 137, 200) disposée de manière à être séparée, vers le côté avant du véhicule, de la paroi de panneau (112) et à être orientée vers la paroi de panneau (112), la paroi avant (136, 137, 200) étant assemblée à la paroi inférieure (114) ; et une paroi supérieure (138, 202) s'étendant d'une extrémité supérieure (141) de la paroi avant (136, 137, 200) au côté arrière du véhicule et assemblée à la paroi de panneau (112), la paroi supérieure (138, 202) reliant la paroi de panneau (112) à la paroi avant (136, 137, 200).

2. Structure de fixation de composants électroniques pour un véhicule (100) selon la revendication 1,
dans laquelle la pluralité de composants électroniques (104, 106, 108) comportent un premier composant électronique (104) et un second composant électronique (106, 108), et
le premier composant électronique (104) est fixé à la paroi avant (136, 137, 200) de l'organe de fixation (110, 110A, 110B), et le second composant électronique (106, 108) est fixé à la paroi supérieure (138, 202).

3. Structure de fixation de composants électroniques pour un véhicule (100) selon la revendication 1,
dans laquelle la pluralité de composants électroniques (104, 106, 108) comportent un premier composant électronique (104) et un second composant électronique (106, 108), et
les premier et second composants électroniques (104, 106, 108) sont fixés à l'un ou l'autre de la paroi avant (136, 137, 200) et la paroi supérieure (138, 202) de l'organe de fixation (110, 110A, 110B) dans différentes orientations.

4. Structure de fixation de composants électroniques pour un véhicule (100) selon la revendication 2 ou 3,
dans laquelle au moins l'un de la pluralité de composants électroniques (104, 106, 108) est fixé à la paroi avant (136, 137, 200) de l'organe de fixation (110, 110A, 110B), et chaque composant électronique (104, 106, 108) restant autre que l'au moins un est fixé à la paroi supérieure (138, 202).

5. Structure de fixation de composants électroniques pour un véhicule (100) selon la revendication 2 ou 3,
dans laquelle la paroi supérieure (138, 202) présente :
une partie horizontale (142, 142a, 142b) orientée vers la paroi inférieure (114) ; et
une partie de bride (144) courbée à partir de la partie horizontale (142, 142a, 142b) et s'étendant vers le haut le long de la paroi de panneau (112), et
le premier composant électronique (104) est fixé à la partie horizontale (142, 142a, 142b), le second composant électronique (106, 108) est fixé à la partie de bride (144), et les premier et second composants électroniques (104, 106, 108) sont fixés dans des orientations différentes.

6. Structure de fixation de composants électroniques pour un véhicule (100) selon la revendication 5,
dans laquelle la paroi supérieure (138, 202) présente une section d'assemblage de panneau (146) assemblant la paroi supérieure (138, 202) à la paroi de panneau (112), et
les premier et second composants électroniques (104, 106, 108) sont agencés dans une direction de largeur de véhicule avec la section d'assemblage de panneau (146) entre eux.

7. Structure de fixation de composants électroniques pour un véhicule (100) selon la revendication 2 ou 3,
dans laquelle la paroi supérieure (138, 202) présente :
une partie horizontale (142, 142a, 142b) orientée vers la paroi inférieure (114) ; et
une partie de bride (144) courbée à partir de la partie horizontale (142, 142a, 142b) et s'étendant vers le haut le long de la paroi de panneau (112), et
le premier composant électronique (104) est fixé à la paroi avant (136, 137, 200), et le second composant électronique (106, 108) est fixé à la partie de bride (144) de la paroi supérieure (138, 202).

8. Structure de fixation de composants électroniques pour un véhicule (100) selon la revendication 7,
dans laquelle la section d'assemblage de panneau (146) assemble la partie de bride (144) à la paroi de panneau (112), et
la partie de bride (144) s'étend à partir de la section d'assemblage de panneau (146) vers le second composant électronique (106, 108).

9. Structure de fixation de composants électroniques pour un véhicule (100) selon la revendication 2 ou 3,
dans laquelle le premier composant électronique (104) est fixé à la paroi avant (136, 137, 200) de l'organe de fixation (110, 110A, 110B), et le second composant électronique (106, 108) est fixé à la paroi supérieure (138, 202),
le premier composant électronique (104) est disposé dans un espace (172) délimité par la paroi avant (136, 137, 200), la paroi supérieure (138, 202), la paroi de panneau (112) et la paroi inférieure (114), et
le second composant électronique (106, 108) est disposé à l'extérieur de l'espace (172).

10. Structure de fixation de composants électroniques pour un véhicule (100) selon la revendication 9,
dans laquelle le premier composant électronique (104) est une lumière, et
le second composant électronique (106, 108) est une antenne.

11. Structure de fixation de composants électroniques pour un véhicule (100) selon la revendication 10,
dans laquelle l'organe de fixation (110, 110A, 110B) présente deux parois latérales (140a, 140b) qui sont séparées l'une de l'autre dans une direction de largeur de véhicule et raccordent les bords latéraux (136a, 136b) de la paroi avant (136, 137, 200) aux bords latéraux (138a, 138b) de la paroi supérieure (138, 202) qui sont adjacents aux bords latéraux (136a, 136b) respectifs de la paroi avant (136, 137, 200), et
les deux parois latérales (140a, 140b) ont chacune une forme s'étendant à l'écart de la paroi de panneau (112) tout en s'étendant vers le bas.
